Europäisches Patentamt

European Patent Office

Office européen des brevets

(11) Numéro de publication: **0 210 693**
**A1**

(12) **DEMANDE DE BREVET EUROPEEN**

(21) Numéro de dépôt: 86201226.7

(22) Date de dépôt: 14.07.86

(51) Int. Cl.⁴ **F16H 19/00** , **G11B 15/675** , **G11B 17/04**

(30) Priorité: 16.07.85 FR 8510858

(43) Date de publication de la demande:
**04.02.87 Bulletin 87/06**

(84) Etats contractants désignés:
**DE FR GB**

(71) Demandeur: **S.A. La Radiotechnique**
**Industrielle et Commerciale**
**51 Rue Carnot**
**F-92150 Suresnes(FR)**
Demandeur: **N.V. Philips'**
**Gloeilampenfabrieken**
**Groenewoudseweg 1**
**NL-5621 BA Eindhoven(NL)**

(72) Inventeur: **Beugin, Michel c/o Société Civile**
**S.P.I.D.**
**209, rue de l'Université**
**F-75007 Paris(FR)**

(74) Mandataire: **Pinchon, Pierre et al**
**Société Civile S.P.I.D. 209 rue de l'Université**
**F-75007 Paris(FR)**

㊹ **Système de guidage à crémaillère et son application.**

㊲ Système de guidage pour tiroir (T) coulissant dans un socle, le tiroir comportant deux crémaillères (C1, C2) situées en vis à vis, et le socle comportant un nombre pair de pignons (P1, P2) rotatifs autour des axes (A1, A2). La force d'entraînement peut être axiale (AT) ou excentrée (SE). Possibilité de tiroirs gigognes.

Application : Tiroir pour appareils audio ou vidéo.

FIG.2

## SYSTEME DE GUIDAGE A CREMAILLERE ET SON APPLICATION

La présente invention a pour objet un système de guidage à crémaillère pour guider le mouvement de deux ensembles dont l'un est mobile par rapport à l'autre, selon un mouvement rectiligne de va-et-vient.

Un système à crémaillère connu est décrit dans la demande de brevet anglais GB 2 112 994 A.

Un tel système est souvent utilisé pour guider le tiroir des appareils de vidéo ou audio : lorsque le tiroir est ouvert on peut changer le disque ou la cassette, lorsque le tiroir est fermé l'appareil est en position de fonctionnement.

Un tel système connu comporte deux crémaillères et deux pignons, les deux pignons étant montés sur un même axe horizontal ; un tel système est sujet à coincement car les pignons peuvent être soumis à la charge du tiroir et en même temps à une sollicitation motrice dissymétrique qui accentue l'effet de coincement, ou d'arc-boutant, et l'usure des dentures.

La présente invention a pour but de supprimer ces inconvénients.

Selon la présente invention, un système de guidage à crémaillère est particulièrement remarquable en ce que l'un des deux ensembles comporte deux crémaillères disposées dans un même plan et parallèlement audit mouvement, et en ce que l'autre ensemble comporte, d'une part au moins deux éléments d'engrenage qui s'engrennent chacun respectivement avec une des deux dites crémaillères, l'axe de rotation de chaque élément d'engrenage étant perpendiculaire au dit plan des crémaillères, d'autre part des moyens de synchronisation pour synchroniser les mouvements de chaque élément d'engrenage de telle sorte qu'il en résulte un déplacement identique de cha que élément d'engrenage respectivement le long de chaque crémaillère.

Ainsi dans le cas d'une sollicitation du va-et-vient excentrée pour déplacer un des deux ensembles mobiles, par exemple une sollicitation coaxiale avec l'axe d'une des deux crémaillères, la crémaillère sollicitée va entrainer l'élément d'engrenage qui lui est engrenné, lequel élément entraine, en synchronisme, l'autre élément d'engrenage qui, prenant appui sur l'autre crémaillère, réagit de telle sorte que le système de guidage ne coince pas malgré l'excentration de la sollicitation.

Un système de guidage selon l'invention est particulièrement avantageux en ce que lesdits moyens de synchronisation sont constitués par deux pignons d'égal diamètre s'engrenant d'une part mutuellement entre eux et d'autre part chacun respectivement à une des deux crémaillères.

Un tel système de guidage est en effet simple à réaliser et peu coûteux.

La présente invention comporte de nombreuses variantes de réalisation, qui seront mieux comprises à l'aide d'exemples non limitatifs, décrites avec les dessins annexés.

Les figures 1 et 2 montrent un mode de réalisation préféré. La figure 1 est une vue en bout. La figure 2 est une vue de dessus selon le plan de coupe 'a' défini sur la figure 1.

Les figures 3, 4, 5, et 6 représentent, - schématiquement, divers modes de réalisation des moyens de synchronisation.

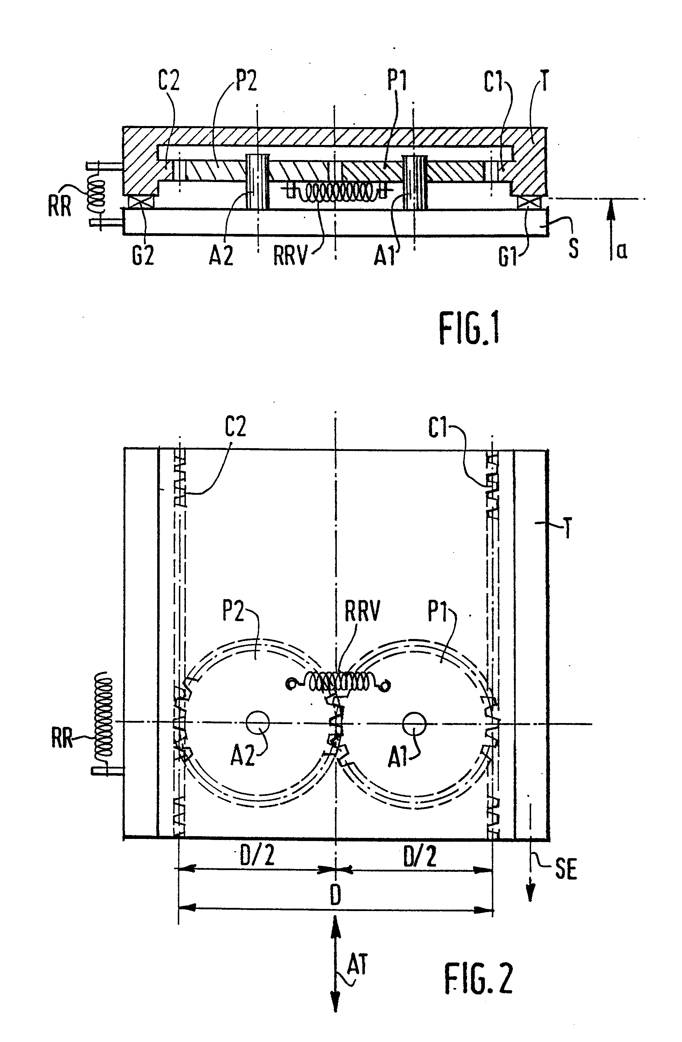

Sur les figures 1 et 2, les mêmes repères ont été utilisés pour faciliter la compréhension, un des ensembles mobiles a été appelé tiroir, et l'autre a été appelé socle ; ils ne sont représentés que symboliquement car l'objet de l'invention réside dans le système de guidage.

Sur les deux figures on voit le tiroir T avec deux crémaillères C1 et C2 situées en vis-à-vis dans le même plan ; les deux pignons P1 et P2 sont rotatifs autour des arbres A1 et A2, les axes de rotation sont perpendiculaires au plan des crémaillères.

Sur la figure 2 on voit la distance D entre les crémaillères, les deux pignons ayant un diamètre de D/2.

Sur la figure 2, le mouvement de va-et-vient du tiroir est représenté par la flèche AT qui se trouve dans l'axe du tiroir ; si une sollicitation est exercée sur l'axe du tiroir, par exemple pour ouvrir le tiroir à partir d'une position de repos telle que représentée, le système de forces est symétrique et chaque crémaillère agit sur un pignon de telle sorte que les deux pignons sont entraînés en rotation de sens inverse l'un de l'autre, du fait que les pignons s'engrennent au niveau de l'axe AT, la vitesse de déplacement des deux crémaillères est nécessairement la même et il n'y a pas de coincement possible ; le même phénomène d'entraînement mutuel et d'absence de coincement se produit même si la sollicitation sur le tiroir est excentrée, par exemple la force SE.

Sur la figure 1, on voit bien que le poids du tiroir n'est pas supporté par les dentures ; en effet le poids du tiroir (T) est supporté par le socle (S) aux endroits G1 et G2 ; pour un glissement satisfaisant il peut suffire que les surfaces de contact en G1 et G2 soient des surfaces lisses mais dans certains cas on peut utiliser des glissières à bille ou autre pour réduire les frottements.

Pour limiter la course du tiroir de telle sorte que le système reste toujours engrenné, on peut prévoir des butées, connues, de fin de course.

Pour que le tiroir reprenne toujours la même position, on peut prévoir un ressort de rappel (RR) attaché d'un côté sur le socle et de l'autre au tiroir ; tel que représenté sur les figures 1 et 2 le ressort (RR) est désaxé mais ceci est sans importance comme expliqué plus haut à propos de la sollicitation SE désaxée.

Une variante de ressort de rappel (RRV) peut aussi être disposée directement entre les deux pignons comme représenté sur la figure 2 ; en effet lorsque le tiroir est sollicité dans le sens de la flèche SE, les points d'attache du ressort (RRV) tendent à s'éloigner du fait des rotations inverses l'une de l'autre de chaque pignon, mais cette disposition n'est convenable que si les pignons n'effectuent qu'une course angulaire limitée par exemple à 1/4 ou 1/2 tour maximum, en rapport avec la course linéaire du tiroir.

Un ressort de torsion, non représenté, agissant sur l'un des pignons serait aussi convenable.

Dans certains cas, l'action du ressort du ressort de rappel peut être trop brutale, il est alors avantageux d'équiper le système avec des moyens d'amortissement pour amortir le mouvement provoqué par le ressort de rappel. Divers moyens d'amortissement sont bien connus de l'homme du métier tels que ceux utilisés, par exemple le pot à graisse pour amortir la descente d'un bras de tourne-disque jusque sur le disque.

Lorsque D est grand, il est avantageux d'ajouter (non représenté) les joues des pignons pour les rendre plus légers.

L'arbre de rotation de chaque pignon peut être soit rapporté sur le socle, soit directement moulé dans le socle ; le moulage direct n'était pas possible avec la disposition adoptée dans le brevet anglais déjà cité.

Pour un mouvement de tiroir commandé automatiquement au moyen d'un moteur, le système selon l'invention est particulièrement avantageux car le moteur peut entraîner un pignon d'entraînement non représenté qui s'engrenne sur l'un des deux pignons susdits ; dans le cas représenté, le moteur est solidaire du socle.

On notera que dans ce qui précède, la notion de socle et de tiroir est parfaitement subjective ; en effet il suffit de regarder la figure 1 à l'envers pour que le socle devienne le tiroir et pour que le tiroir devienne le socle ; dans ce cas les crémaillères sont dans le socle, et les pignons font partie du tiroir et le système obtenu est équivalent ; le socle et le tiroir peuvent être vendus séparément.

Dans certains cas, il peut être intéressant d'augmenter le nombre de pignons ; en jouant sur les diamètres des pignons il est même possible d'obtenir des courses et des vitesses différentes pour commander les mouvements d'un jeu de tiroirs gigognes.

Sur la figure 2, qui représente un mode de réalisation préféré, la droite qui relie les contours de chaque pignon est perpendiculaire aux crémaillères, ceci n'est pas une obligation.

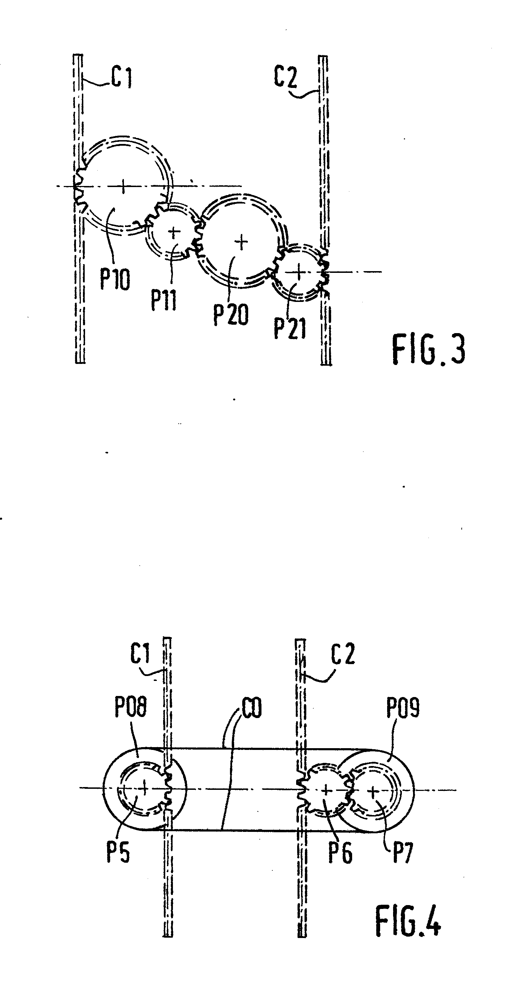

Sur la figure 3 est représentée schématiquement une variante où cette perpendicularité n'est pas réalisée ; une variante de ce type, dans laquelle les moyens de synchronisation sont constitués par un système d'engrenage, convient lorsqu'il y a des contraintes d'encombrement ; sur la figure 3 ce système d'engrenage comporte 4 pignons et les crémaillères sont en vis-à-vis ; les pignons P10 et P20 ont le même diamètre ; les pignons P11 et P21 ont le même diamètre.

Sur la figure 4, les crémaillères C1, C2 sont dos-à-dos, et le système de synchronisation est constitué par une courroie C0 sans glissement ; une courroie crantée est un mode connu de réalisation de courroie sans glissement ; dans le mode de réalisation de la figure 4 il a 3 pignons P5, P6, P7 et deux poulies PO8, PO9.

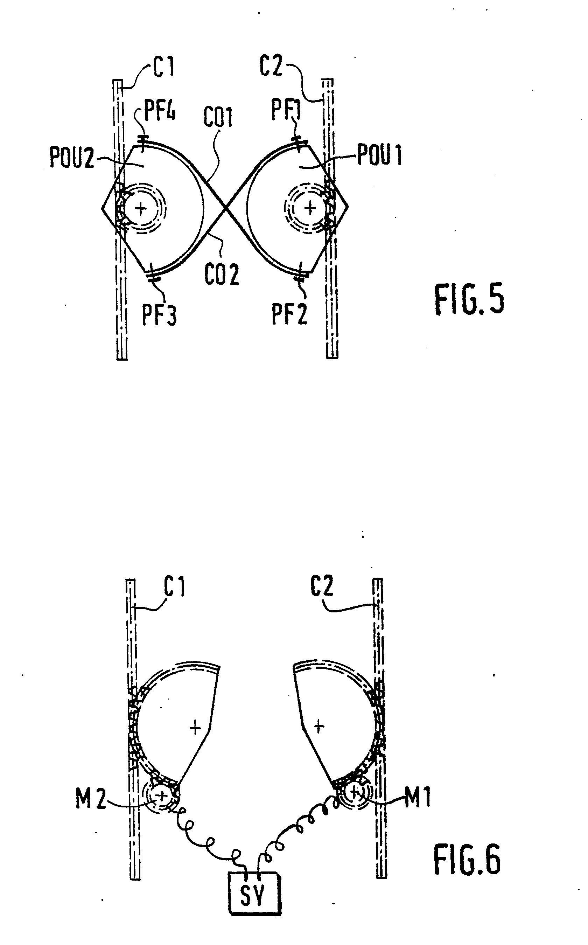

Sur la figure 5, le système de synchronisation est réalisé par une liaison de type courroie mais ici la courroie n'est pas sans fin contrairement à la figure 4 ; les deux éléments de courroie CO1 et CO2 ont pour effet de limiter la course du déplacement de va-et-vient ; les poulies POU1 et POU2 sont en fait des secteurs circulaires et non pas des cercles complets ; cette disposition convient lorsque l'on est limité par l'encombrement ; les éléments des courroies CO1, CO2 sont de la corde à piano, ou autre, fixé avec des moyens de fixation PF1, PF2, PF3, PF4, connus.

Sur la figure 6, un mode de réalisation avec des pignons incomplets, ou portions d'engrenage, est représenté ; ce mode convient pour une course de va-et-vient relativement limitée ; les moyens de synchronisation sont constitués, par exemple, avec deux moteurs M1, M2, synchronisées par des moyens de synchronisation connus SY.

Au vue des variantes représentées, il est clair qu'il existe une multitude de variantes possibles que l'homme du métier pourra réaliser sans sortir du cadre de l'invention.

## Revendications

1. Système de guidage à crémaillère pour guider le mouvement de deux ensembles dont l'un est mobile par rapport à l'autre selon un mouvement rectiligne de va-et-vient, caractérisé en ce que l'un des deux ensembles comporte deux crémaillères disposées dans un même plan et parallèlement audit mouvement, et en ce que l'autre ensemble comporte, d'une part au moins deux éléments d'engrenage qui s'engrennent chacun respectivement avec une des deux dites crémaillères, l'axe de rotation de chaque élément d'engrenage étant perpendiculaire audit plan des crémaillères, d'autre part des moyens de synchronisation pour synchroniser les mouvements de chaque élément d'engrenage de telle sorte qu'il en résulte un déplacement identique de chaque élément d'engrenage respectivement le long de chaque crémaillère.

2. Système de guidage selon la revendication 1, caractérisé en ce que lesdits moyens de synchronisation sont constitués par deux moteurs synchronisés, chaque moteur entraînant respectivement un des deux éléments d'engrenage.

3. Système de guidage selon la revendication 1, caractérisé en ce que lesdits moyens de synchronisation sont constitués par un système de courroie sans glissement.

4. Système de guidage selon la revendication 1, caractérisé en ce que lesdits moyens de synchronisation sont constitués par un système d'engrenage.

5. Système de guidage selon la revendication 4, caractérisé en ce que lesdits crémaillères étant disposées en vis-à-vis, lesdits éléments d'engrenage et ledit système d'engrenage ne font qu'un en étant constitués par deux pignons d'égal diamètre s'engrenant d'une part mutuellement entre eux et d'autre part chacun respectivement à une des deux crémaillères.

6. Système de guidage selon la revendication 5, caractérisé en ce que chacun des deux pignons a un diamètre égal à la moitié de la distance qui sépare lesdites deux crémaillères.

7. Système de guidage selon l'une quelconque des revendications précédentes, caractérisé en ce qu'il comporte un seul ressort de rappel pour, après un déplacement, rappeler les deux ensembles mobiles jusqu'à une position de repos.

8. Système de guidage selon la revendication 7, caractérisé en ce qu'il comporte des moyens d'amortissement pour amortir le mouvement provoqué par le ressort de rappel.

9. Système de guidage selon l'une quelconque des revendications 1, 3, 4, 5, 6, 7 ou 8, caractérisé en ce qu'il comporte un moteur pour entrainer un seul des deux éléments d'engrenage.

10. Appareil de vidéo ou audio comportant un socle et un tiroir mobiles l'un par rapport à l'autre caractérisé en ce qu'il est muni d'un système de guidage à crémaillère selon l'une quelconque des revendications 1 à 9.

11. Elément pour un système de guidage selon l'une quelconque des revendications 1 à 9, ou pour un appareil selon la revendication 10, caractérisé en ce qu'il comporte deux crémaillères disposées dans un même plan.

12. Elément pour un système de guidage selon l'une quelconque des revendications 1 à 9, ou pour un appareil selon la revendication 10, caractérisé en ce qu'il comporte deux éléments d'engrenage synchronisés

0 210 693

FIG.1

FIG.2

FIG.3

FIG.4

FIG.5

FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A-1 562 576  (BARKER & NELSON) <br> * Page 1, lignes 21-81; figure * | 1,4-6, 9 | F 16 H  19/00 <br> G 11 B  15/675 <br> G 11 B  17/04 |
| X | DE-A-2 618 558  (R. HÖRNLEIN) <br><br> * Pages 8-10,13; figures * | 1,3-5, 9 | |
| X | US-A-1 881 475  (M.D. GIBSON) <br> * Page 1, lignes 73-99; figures * | 1,3 | |
| X | US-A-2 865 208  (A.J. WACHT) <br> * Colonne 4, lignes  43-74;  figures 1-5 * | 1,3 | |
| X | NL-A-7 305 016  (GEURTSEN) <br><br> * Page 3, lignes 14-36; figures * | 1,3,4, 9 | |
| Y | GB-A-2 139 800  (PIONEER) <br><br> *  Page 2, lignes 27-130; page 4, ligne 40 - page 5, ligne 44; figures * | 1,3,4, 7-12 | |
| Y | EP-A-0 130 636  (PHILIPS) <br><br> * Page 4,  ligne  25  -  page  5, ligne 7; figure 1 * | 1,3,4, 7-12 | |

DOMAINES TECHNIQUES RECHERCHES (Int. Cl.4)

G 11 B
A 47 B
F 16 C
F 16 H

---      -/-

Le présent rapport de recherche a été établi pour toutes les revendications

| Lieu de la recherche <br> LA HAYE | Date d'achèvement de la recherche <br> 27-10-1986 | Examinateur <br> DECLAT M.G. |
|---|---|---|

## DOCUMENTS CONSIDERES COMME PERTINENTS

Page  2

| Catégorie | Citation du document avec indication. en cas de besoin. des parties pertinentes | Revendication concernée | CLASSEMENT DE LA DEMANDE (Int. Cl.4) |
|---|---|---|---|
| A | EP-A-0 021 386  (W. FRELLER) <br> * Résumé;  revendication 1; figures * | 1,3 | |
| | --- | | |
| D,A | BE-A- 891 045  (STAAR) <br><br> * Page 2,  ligne  35  -  page  3, ligne 35; figures * | 1,4,7, 10,12 | |
| | --- | | |
| A | US-A-4 434 444  (M. SATO) | | |
| | --- | | |
| A | FR-A-2 540 661  (VICTOR) | | |
| | --- | | |
| A | EP-A-0 072 370  (ADS-ANKER) | | |
| | --- | | DOMAINES TECHNIQUES RECHERCHES (Int. Cl.4) |
| A | US-A-3 005 672  (O.A. BECKER) | | |
| | ----- | | |

Le présent rapport de recherche a été établi pour toutes les revendications

| Lieu de la recherche <br> LA HAYE | Date d'achèvement de la recherche <br> 27-10-1986 | Examinateur <br> DECLAT M.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82